# EUROPÄISCHE PATENTSCHRIFT

(11) **EP 0 513 659 B1**
(45) Veröffentlichungstag und Bekanntmachung des Hinweises auf die Patenterteilung: **19.04.1995**
(21) Anmeldenummer: 92107678.2
(22) Anmeldetag: 07.05.1992
(51) Int. Cl.: C08J 7/04, C08G 18/62, C09D 133/06

(54) **Verfahren zur Grundierung von Kunststoffsubstraten, Uberzugsmittel hierzu und dessen Verwendung**
Process for priming plastic substrates, coating to be used and its application
Procédé pour appliquer une couche primaire sur un substrat plastique, revêtement y relatif et son application

(30) Priorität: 13.05.1991 DE 4115588
(43) Veröffentlichungstag der Anmeldung: 19.11.1992
(73) Patentinhaber: Herberts Gesellschaft mit beschränkter Haftung, 42285 Wuppertal (DE)
(72) Erfinder: Mass, Manfred, W-5600 Wuppertal 2 (DE); Bederke, Klaus, Dr., W-4322 Sprockhövel (DE); Kerber, Hermann, W-5600 Wuppertal 21 (DE)
(74) Vertreter: Türk, Gille, Hrabal, Leifert

(56) Entgegenhaltungen:
- EP-A- 0 260 456
- FR-A- 2 432 542
- WORLD PATENTS INDEX LATEST Derwent Publications Ltd., London, GB; AN 83-24153K (10) & JP-A-58017174

## Beschreibung

Die Erfindung betrifft die Lackierung, insbesondere die Grundierung von Kunststoffsubstraten, insbesondere von Polypropylensubstraten. Sie ist besonders geeignet für die Lackierung von Kraftfahrzeugteilen aus Kunststoffen, insbesondere Polypropylen.

Kunststoffteile finden in der Industrie immer breitere Verwendung. Sie werden allein oder auch zusammen mit anderen Teilen verwendet. Um eine gute und optisch gleichmäßige Oberfläche zu erzeugen, ist es häufig notwendig, diese Teile mit einem Lack zu beschichten. Der Lack hat dabei mehrere Aufgaben. Einerseits dient er dazu, dem Substrat eine einheitliche Oberfläche zu verleihen, die sich gegebenenfalls nicht von der Oberfläche angrenzender Teile, die aus einem anderen Substrat bestehen, unterscheidet. Außerdem wird durch die Beschichtung die Oberfläche vor Einflüssen aus der Umgebung, z.B. Feuchtigkeit oder Regen, geschützt, d.h. die Wetterbeständigkeit wird verbessert. Das führt zu einer längeren Lebensdauer der Teile. Weiterhin ist es möglich, daß durch die Beschichtung bestimmte Eigenschaften gezielt beeinflußt werden, z.B. die Gleitfähigkeit oder elektrische Leitfähigkeit von Kunststoffteilen.

Um diese Eigenschaften sicherzustellen, ist es notwendig, daß die Beschichtung fest auf dem Untergrund haftet. Insbesondere bei mechanischen Belastungen darf der Lack nicht von der Oberfläche des Kunststoffteiles abspringen. Außerdem muß sichergestellt sein, daß die mechanischen Eigenschaften des Kunststoffteiles nach der Lackierung noch ausreichend sind. Üblicherweise haben Lackierungen auf Kunststoffsubstraten einen eindeutig negativen Effekt auf die mechanische Stabilität des Kunststoffteiles. Dieser tritt besonders bei tiefen Temperaturen auf. Diese Problematik wird z.B. in "Farbe + Lack" Nr. 5 (1988), S. 337, oder in "defazet" Nr. 2 (1979), S. 59, diskutiert.

Um eine gute Haftung zu erzielen, besitzen die bekannten Primer und Grundierungen hohe Lösungsmittelgehalte. Der Festkörper der Überzugsmittel liegt zwischen 2 und 30 %.

In der EP-A-0 250 052 wird ein Verfahren beschrieben, bei dem Kunststoffteile mit mehreren Schichten eines Überzugsmittels versehen werden. Das Wesentliche des dortigen Verfahrens liegt darin, daß als Grundierung zwei verschiedene Schichten nass-in-nass aufgetragen werden, die Bindemittel auf Basis spezieller Polyester enthalten. Durch eine unterschiedliche Einstellung der Elastizität der Schichten soll eine besonders gute Stabilität gegen Steinschlag erzielt werden. Dieses Verfahren hat den Nachteil, daß zwei verschiedene Beschichtungsvorgänge allein schon für die Grundierung benötigt werden.

In der EP-A-0 267 376 wird die Lackierung von durchsichtigen flexiblen Scheiben aus Kunststoff beschrieben. Es wird so verfahren, daß das flexible Substrat mit einer Schicht aus einem Zweikomponenten-Klarlack auf der Basis von Acrylaten versehen wird. Dieser Klarlack muß hochelastisch sein, d.h. eine Reißdehnung von über 100 % aufweisen. Die dort erzielte Beschichtung ist zwar hochelastisch, erfüllt aber die Bedingungen an Härte und Kratzfestigkeit nicht, die an eine Automobilgrundierung gestellt werden. Außerdem werden nur spezielle Substrate lackiert.

In der JP-57198763 werden Überzugsmittel für Polyolefinsubstrate beschrieben. Deren Bindemittelmischung besteht aus 10 bis 90 Gew% eines Copolymeren aus Methacrylsäureamiden und damit copolymerisierbaren ungesättigten Monomeren sowie 90 bis 10 Gew% von chlorierten Polyolefinen. Ein Vernetzer wird in dieser Überzugszusammensetzung nicht verwendet, der Überzug trocknet physikalisch.

In der JP-56050971 werden Überzugsmittel für Kunststoffsubstrate beschrieben, die aus einer Mischung von einem Acrylatpolymeren, einem chlorierten Polyolefin sowie einem Harz mit mehr als zwei Epoxidgruppen pro Molekül bestehen. Das Acrylpolymer besteht aus basischen stickstoffhaltigen Acrylmonomeren sowie (Meth)acrylestermonomeren sowie weiteren copolymerisierbaren Monomeren. Als epoxidgruppenhaltige Komponente werden epoxidgruppenhaltige Polyether beschrieben.

In WORLD PATENTS INDEX LATEST, Derwent Publications Ltd., London, GB, AN 83-24153K werden Überzugsmittel für Polyolefinsubstrate beschrieben, die aus mit Isocyanaten vernetzenden Hydroxypolyacrylcopolymeren und chlorierten Polyolefinen bestehen.

Die EP-A-0 260 456 beschreibt die Herstellung von Hydroxypolyacrylaten, die als Pigmentanreibemittel eingesetzt werden.

In der FR-A-2 432 542 werden Zwei-Komponenten-Überzugsmittel auf Polyacrylatbasis zur Lackierung von Automobilkarossen beschrieben.

Aufgabe der Erfindung ist es, eine Grundierung zur Verfügung zu stellen, mit der Kunststoffteile, insbesondere Kraftfahrzeugteile, beschichtet werden können. Dabei soll eine gute Haftung auf dem Untergrund stattfinden. Außerdem soll die mechanische Stabilität des Substrates nicht wesentlich durch die Lackierung negativ beeinflußt werden. Weiterhin sollen die so beschichteten Substrate eine gute Kälte-Schlagzähigkeit aufweisen.

Diese Aufgabe wird durch das den Gegenstand der Erfindung bildende Verfahren zur Grundierung von Kunststoffsubstraten durch Auftrag eines Überzugsmittels auf Lösemittelbasis und anschließend Aushärtung gelöst, das dadurch gekennzeichnet ist, daß man ein Überzugsmittel verwendet auf der Basis von
A) 10 bis 35 Gew% eines oder mehrerer Bindemittel mit einer OH-Zahl von 40 bis 150, das erhältlich ist durch Umsetzung von OH-Gruppen enthaltenden, aus (Meth)acrylamiden, Hydroxyalkyl(meth)acrylaten und copolymerisierbaren olefinisch ungesättigten Verbindungen aufgebauten Copolymerisaten, mit
   einem Zahlmittel des Molekulargewichts (Mn) von 3000 bis 100000, und
   einer Glasübergangstemperatur von -20 bis +75°C,
   mit Polyisocyanaten,
B) 0 bis 20 Gew%, z.B. 0 bis 19,5 Gew% weiterer Bindemittel,
C) 30 bis 70 Gew% organischer Lösemittel,
D) 15 bis 45 Gew% Pigmenten und/oder Füllstoffen,
E) 0 bis 15 Gew% lacktechnischen Additiven, und
F) 1 bis 30 Gew% eines Vernetzers auf der Basis eines oder mehrerer Epoxidharze mit freien Epoxidgruppen oder eines oder mehrerer Polyisocanate.

Beim erfindungsgemäßen Verfahren wird das Überzugsmittel auf das Substrat aufgetragen und dann bei Raumtemperatur oder bei erhöhter Temperatur getrocknet oder vernetzt. Auf die so erhaltene Grundierung können gegebenenfalls weitere Überzugsschichten appliziert werden, wie z.B. Füller, Basis- oder Decklacke. Der Auftrag kann auch naß-in-naß erfolgen, worauf dann gemeinsam ausgehärtet wird.

Bei den erfindungsgemäß einsetzbaren Bindemitteln handelt es sich um Copolymerisate auf der Basis von (Meth)acrylsäureamiden und Hydroxyalkyl(meth)acrylaten und damit copolymerisierbaren Monomeren mit olefinischen Doppelbindungen, wobei diese Copolymerisate mit einem oder mehreren Polyisocyanaten modifiziert sind.

Der hier verwendete Ausdruck (Meth)acryl, beispielsweise in Verbindung mit (Meth)acrylamiden, (Meth)acrylaten, Hydroxyalkyl(meth)acrylaten usw., bedeutet jeweils Methacryl und/oder Acryl, d.h. Methacrylamide und/oder Acrylamide, Methacrylate und/oder Acrylate, Hydroxyalkylmethacrylate und/oder Hydroxyalkylacrylate usw.

Die den Bindemitteln zugrundeliegenden Copolymerisate werden bevorzugt aus folgenden Monomeren aufgebaut:
0,5 bis 40 Gew% (Meth)acrylamide auf Basis von (Meth)acrylsäure und ω-tert.-Aminoalkylaminen und/oder primären Aminen, 10 bis 40 Gew% Hydroxyalkyl(meth)acrylate und 20 bis 89,5 % copolymerisierbare olefinisch ungesättigte Verbindungen. Die Polymerisation findet bevorzugt als Lösungspolymerisation statt bei Temperaturen zwischen 60 und 160 °C, vorzugsweise zwischen 80 und 140 °C. Die Polymerisationsreaktion wird mit bekannten Polymerisationsinitiatoren gestartet. Geeignete Initiatoren sind Per- und Azoverbindungen. Weiterhin können auch Kettenüberträger eingesetzt werden.

Die Polymerisationsbedingungen (Temperatur, Lösungsmittelkonzentration Dosierung der Monomeren) werden so gewählt, daß das Molekulargewicht zwischen 3000 und 100000 liegt. Die Copolymerisate haben eine Glasübergangstemperatur von -20 bis +75°C.

80 bis 95 Gew% des vorstehend erhaltenen Copolymerisats werden mit 5 bis 20 Gew% eines oder mehrerer unverkappte und gegebenenfalls auch verkappte Isocyanatgruppen aufweisender Polyisocyanate modifiziert, die mit den OH-Gruppen des Copolymeren reagieren. Dabei wird so gearbeitet, daß sich für das erhaltene modifizierte Bindemittel eine OH-Zahl von 40 bis 150, beispielsweise von 60 bis 150, bevorzugt von 80 bis 120 ergibt. Über die OH-Gruppen kann das Acrylatharz nachträglich noch modifiziert werden. Ebenfalls ist es möglich, die OH-Gruppen der Monomere gegebenenfalls vor der Polymerisation umzusetzen.

Als bevorzugte tertiäre aminogruppenhaltige (Meth)acrylamid-Monomere seien beispielsweise erwähnt N(N,N-Diethylaminopropyl)-(meth)acrylamid oder N(N,N-Dimethylaminoneopentyl)-(meth)acrylamid. Die Alkylsubstituenten am tertiären Amin sind bevorzugt C₁-C₄ Alkylgruppen, die Alkylgruppe am Amid-Stickstoff hat 1 bis 18 C-Atome. Als Beispiele für die alkylsubstituierten (Meth)acrylamide werden erwähnt N-Methyl-, N-n-Propyl-, N-n-Butyl-(meth)-acrylamid. Es sind jedoch weitere Alkylsubstituenten von C₁-C₈, gegebenenfalls auch substituiert, möglich. Als Hydroxyalkyl(meth)acrylate werden bevorzugt solche mit einem Alkylrest von C₂-C₈ eingesetzt. Beispiele sind Hydroxyethylacrylat, Hydroxyethylmethacrylat, 2-Hydroxypropylacrylat oder 4-Hydroxybutylmethacrylat. Diese Monomere können gegebenenfalls an der OH-Gruppe vor der Polymerisation umgesetzt werden. Beispielsweise können Verbindungen, die reaktive Epoxidgruppen oder reaktive Isocyanatgruppen aufweisen, mit diesen OH-funktionellen Monomeren umgesetzt werden.

Weitere copolymerisierbare Monomere sind beispielsweise: Phenylaromaten, wie Styrol, (Meth)acrylester, wie Methyl-, Ethyl-, n-Butyl-, Isobutyl- oder tert.-Butylacrylate oder -methacrylate, Vinylester, wie Vinylacetat, oder Alkylester ungesättigter Polycarbonsäuren.

Die zur Herstellung der erfindungsgemäß eingesetzten Bindemittel wie vorstehend beschrieben erhaltenen Copolymerisate werden mit Polyisocyanaten weiter umgesetzt, bei denen es sich um solche handelt, die mindestens teilweise unverkappte Isocyanatgruppen enthalten, die mit den OH-Gruppen des Copolymerisats reagieren. Sie können jedoch auch zusätzlich noch verkappte Isocyanatgruppen enthalten. Bevorzugt sind teilweise verkappte Polyisocyanate. Als Verkappungsmittel können übliche CH-, NH- oder OH-acide Verbindungen verwendet werden, wie CH-acide Ester, z.B. Acetessigsäurealkylester, ε-Caprolactam, Alkohole, wie tert-Butanol und Oxime, wie Methylethylketoxim.

Zweckmäßig wird das vorstehend erhaltene Copolymerisat mit dem Polyisocyanat so umgesetzt, daß das Äquivalentverhältnis der reaktionsfähigen Hydroxylgruppen des Copolymerisats zu den Isocyanatgruppen teilweise verkappten oder unverkappten Polyisocyanats sich wie 99:1 bis 70:30, vorzugsweise 95:5 bis 85:15 verhält.

Bevorzugt werden Polyisocyanate verwendet, die in ihrem Molekül Biuret-, Urethan- oder Isocyanuratgruppen enthalten, bei derartigen Materialien handelt es sich um übliche Handelsprodukte.

Gemäß der Erfindung ist es zweckmäßig zur Umsetzung mit dem Copolymerisat Polyisocyanate einzusetzen, die nur eine freie Isocyanatgruppe pro Molekül enthalten. Solche können aus Handelsprodukten dadurch hergestellt werden, daß sie mit einer entsprechenden Menge an Verkappungsmittel umgesetzt werden. Beispiele für verwendbare Polyisocyanate sind ein Biuretgruppen enthaltendes Umsetzungsprodukt von Hexamethylendiisocyanat und Wasser, beispielsweise aus 3 Mol Hexamethylendiisocyanat mit 1 Mol Wasser mit einem NCO-Gehalt von etwa 22 % (entsprechend dem Handelsprodukt Desmodur N®); ein Isocyanuratgruppen enthaltendes Polyisocyanat, das beispielsweise hergestellt wird durch Trimesierung von Hexamethylendiisocyanat, mit einem NCO-Gehalt von etwa 21,5 % (entsprechend dem Handelsprodukt Desmodur 3390®); oder Urethangruppen enthaltende Polyisocyanate, beispielsweise Reaktionsprodukte aus 3 Mol Diisocyanat mit 1 Mol Triol, z.B. Toluylendiisocyanat und Trimethylolpropan, NCO-Gehalt etwa 17,5 % (entsprechend dem Handelsprodukt Desmodur L®).

Entsprechende Umsetzungsprodukte von Copolymerisaten und Polyisocyanaten werden beispielsweise in der EP-A-0 260 456 beschrieben.

Die zusammen mit den Bindemitteln der Komponente A verwentbaren Bindemittel der Komponente B werden, bezogen auf das Gewicht von Bindemittel (Komponente A) und Vernetzer (Komponente F), bevorzugt bis zu 30 Gew.% zugesetzt.

Über die zusätzlichen Bindemittel der Komponente B, die auch mit dem Vernetzer reagieren sollen und so einen homogenen Überzugsfilm ergeben, können Eigenschaften im Film gezielt beeinflußt werden. So kann z.B. die Elastizität verbessert werden. Weiterhin haben manche Harze eine haftungsfördernde Wirkung. Eine weitere Möglichkeit ist, daß in manchen Fällen durch das Zusatzharz die chemische Stabilität des Überzugs verbessert werden kann. Ebenso können Viskosität und Verlaufseigenschaften gezielt gesteuert werden. Die zusätzlichen Bindemittel können auf Basis von üblichen filmbildenden Polyesterharzen, Polyurethanharzen, Polyharnstoffharzen, Phenolharzen oder Polyether-Bindemitteln bestehen.

Beispiele für solche verwendbare bekannte Bindemittel sind in den Patentschriften DE-A-34 21 122 und EP-A-0 393 609 beschrieben.

Weitere Beispiele für Bindemittel der Komponente B sind Polyester oder Polyurethanharze, die für die Herstellung von Überzugsmitteln bekannt sind. Es sind lineare oder verzweigte Hydroxy- oder Carboxy-funktionelle gesättigte Polyester oder Polyurethane. Sie können gegebenenfalls auch OH-funktionell sein. Das Molekulargewicht (Mn) beträgt ca. 500 bis 5000, die Säurezahl 5 bis 30, die OH-Zahl 40 bis 160. Die Polyester werden durch Umsetzung von Di- oder Tricarbonsäuren mit Di- oder Polyolen hergestellt. Über die Auswahl der Komponente können z.B. Verzweigungsgrad, Funktionalität oder Viskosität beeinflußt werden. Die Bindemittel können über reaktive Gruppen mit Di- oder Polyisocyanaten umgesetzt werden. Dabei entstehen dann urethangruppenhaltige Polymere, die etwas niedrigere Funktionalitäten und höhere Molekulargewichte aufweisen. Polyurethanharze entstehen beispielsweise durch Umsetzung von Polyethern mit Di- oder Polyisocyanaten. Durch die Auswahl der Edukte können Verzweigung, Flexibilität oder weitere funktionelle Gruppen beeinflußt werden. Beispielsweise werden solche Bindemittel in den DE-A-34 21 122 und EP-A-0 393 609 beschrieben.

Zu diesen Bindemitteln können gegebenenfalls weitere bekannte Bindemittel zugesetzt werden. Es handelt sich dabei um OH-funktionelle Polyester oder Polyurethanharze. Weiterhin können zusätzlich bekannte Vernetzer wie z.B. Melaminharze, Harnstoffharze oder Benzoguanaminharze verwendet werden, wie z.B. in der EP-A-0 245 786 beschrieben. Sie dienen zur Vernetzung der zusätzlichen Bindemittelkomponente.

Vernetzer für die erfindungsgemäßen Überzugsmittel sind beispielsweise Epoxidharze oder verkappte oder nichtverkappte Polyisocyanate. Bei den Polyisocyanaten handelt es sich um die üblichen Isocyanate für Lacke, wie sie beispielsweise in "Farbe + Lack" 12, 1983, S. 928 oder in EP-A-0 247 443 beschrieben sind. Es können aliphatische oder aromatische Isocyanate eingesetzt werden, bevorzugt werden aliphatische Isocyanate verwendet. Die Funktionalität der Isocyanate soll > 2 betragen. Werden reaktive Isocyanatverbindungen eingesetzt, so ist es bevorzugt, daß Zweikomponenten-Systeme (2K-Systeme) eingesetzt werden, bei denen Bindemittel und Vernetzer getrennt gelagert werden. Die Reaktivität der Vernetzer ist so groß, daß gegebenenfalls schon bei Raumtemperatur eine Vernetzung eintritt. Diese kann durch Zusatz von Katalysatoren beschleunigt werden.

Werden verkappte Isocyanate eingesetzt, so können Einkomponenten-Systeme (1K-Systeme) hergestellt werden. Diese benötigen eine erhöhte Temperatur zum Vernetzen, da in einem ersten Reaktionsschritt zuerst die Verkappungsmittel abgespalten werden und danach die Vernetzung eintritt. Als Verkappungsmittel können die üblichen bekannten Monoalkohole, Monoamine, Oxime oder Lactamverbindungen eingesetzt werden.

Als Vernetzer können ebenfalls epoxidgruppenhaltige Harze eingesetzt werden. Dabei handelt es sich um bekannte Epoxidgruppen tragende Verbindungen, wie beispielsweise Umsetzungsprodukte von Epichlorhydrinen mit aromatischen Bisphenolen. Sie sollen eine Funktionalität etwa 2 aufweisen. Das Molekulargewicht liegt bei etwa 400 bis 4000. Bevorzugt sind Epoxidharze auf Basis von aromatischen Verbindungen. Beispiele für solche Komponenten sind Bisphenol A Epichlorhydrin-Umsetzungsprodukte (Epicote®-Typen) oder Umsetzungsprodukte von Novolaken mit Epichlorhydrin. Diese Verbindungen sind kommerziell erhältlich und werden im allgemeinen als viskose Flüssigkeit, d.h. gegebenenfalls in Lösemitteln gelöst, eingesetzt.

Als Katalysatoren können die bekannten Epoxid- und Isocyanat-Katalysatoren eingesetzt werden, beispielsweise Aminverbindungen oder Schwermetallverbindungen. Beispiele dafür sind Trialkylamin, Dibutylzinndilaurat oder Zinkoctoat. Die Katalysatoren werden in üblichen geringen Mengen eingesetzt. Bei 2K-Materialien ist darauf zu achten, daß die Topfzeit des fertigen Lacks noch eine ausreichende Verarbeitung und ein ausreichendes Verfließen ermöglicht. Das kann beispielsweise über die Katalysatormenge oder über die Reaktivität des Isocyanats oder des Epoxidharzes erzielt werden. Bei 1K-Materialien kann über den Katalysator die Entkappung und die Vernetzungsreaktion beeinflußt werden.

Bei den verwendeten Pigmenten oder Füllstoffen handelt es sich um Pigmente und Füllstoffe, wie sie in der Lackindustrie üblich sind. Dazu zählen beispielsweise bunte oder unbunte Pigmente auf organischer oder anorganischer Basis, z.B. Titandioxid, Ruß, Eisenoxide, Füllstoffe auf organischer oder anorganischer Basis, z.B. Talkum, Aluminium-Silikat, organische vernetzte Mikroteilchen, Korrosionsschutzpigmente, transparente oder hochdisperse Pigmente, z.B. pyrogene Kieselsäure, Leitfähigkeits-Pigmente oder feste Katalysatoren. Die Pigmente müssen so dispergiert und dann vermahlen sein, daß die Teilchengröße sehr gering ist und eine glatte Oberfläche des Überzugsfilms ermöglicht. Geeignete Aggregate dazu sind der Literatur bekannt.

Als Lösemittel sind die üblichen Lacklösemittel geeignet. Über das Lösevermögen für das Bindemittel kann die Viskosität beeinflußt werden.

Über den Siedepunkt der Lösemittel kann die physikalische Trocknung der Lackoberflache eingestellt werden. Niedrigsiedende Lösemittel bewirken ein schnelles Trocknen, hochsiedende Lösungsmittel halten den Lackfilm lange flüssig und ermöglichen so einen guten Verlauf. Aus Umweltschutzgründen soll der Lösungsmittelgehalt relativ gering sein. Beispiele für Lösungsmittel sind Ketone wie z.B. Methylisobutylketon, Alkohole wie z.B. Ethanol oder Butanol, Glykole wie z.B. Propylenglykol, Ether wie z.B. Diglykol-dimethyl-ether, lineare, verzweigte, cyclische, aliphatische oder aromatische Kohlenwasserstoffe wie z.B. Cyclohexan, n-Hexan, Dekan, Toluol oder Xylol, Ester wie z.B. Ethyl- oder Butylacetat oder auch Gemische davon. Die Lösungsmittel sollen auch unter dem Gesichtspunkt der Arbeitssicherheit gewählt werden, d.h. sie sollen möglichst eine geringe Toxizität haben. Halogenkohlenwasserstoffe sind aus diesem Grund nicht bevorzugt.

Die Vernetzer werden in Mengen von 1 bis 30 Gew.-% eingesetzt. Bevorzugt werden 2 bis 20 Gew.-% eines oder mehrerer Epoxidharze mit mindestens zwei Epoxidgruppen pro Molekül oder eines oder mehrerer Polyisocyanate mit im Durchschnitt mehr als zwei reaktiven Isocyanatgruppen pro Molekül verwendet.

Als Additive können bekannte Additive verwendet werden. Beispiele dafür sind Verlaufsmittel, Antischaummittel, Antikratermittel, Katalysatoren Benetzungsmittel und Haftvermittler; diese werden bevorzugt in Mengen von 0,1 bis 15 Gew.-% verwendet.

Diese Additive sind im Prinzip bekannt und können je nach den zu beeinflussenden Eigenschaften ausgewählt werden. Dabei ist darauf zu achten, daß sie die Haftung zu den Nachfolgeschichten nicht verschlechtern. Eine spezielle Substanzklasse sind die Haftvermittler. Diese dienen auch dazu, daß der Überzugsfilm auf dem Substrat haftet. Die Haftvermittler können besonders auf den Untergrund abgestimmt werden. Diese können bei speziellen Substraten die Haftung deutlich verbessern. Die Additive werden so gewählt, daß sie die Lagerstabilität der noch nicht applizierten Überzugsmittel nicht negativ beeinflussen.

Ein bevorzugtes Beispiel für Haftvermittler sind chlorierte Polyolefine (CPO). Diese können bei bestimmten Substraten, z.B. Polyolefinen, zu deutlich besseren Haftwerten führen. Die Einsatzmenge der CPO beträgt 0,1 bis 15 %, bevorzugt zwischen 0,5 bis 7,5 %. Beispiele für chlorierte Polyolefine sind Polyethylen- oder Polypropylenpolymere mit einem Chlorierungsgrad von 10 bis 40 Gew% Chlor und einem Zahlmittel des Molekulargewichts (Mn) von 5000 bis 50000. Bevorzugt sind CPO auf Basis von Polypropylen. Die CPO sind handelsüblich und liegen meist in organischen Lösemitteln. gelöst vor, so daß sie eine zur Verarbeitung geeignete Viskosität besitzen. Der Festkörper dieser Lösungen kann in weiten Grenzen variiert werden, abhängig vom Lösungsmittel und vom verwendeten CPO.

Der Festkörperanteil des erfindungsgemäßen Überzugsmittels beträgt im allgemeinen 30 bis 70 Gew.-%. Er ist abhängig von der Applikationsart und der dabei benötigten Viskosität. Der Festkörper kann in der Lagerform höher sein und erst vor dem Auftragen des Überzugsmittels mit Lösungsmittel eingestellt werden.

Aus den Bindemitteln, den Pigmenten und den Additiven können nach bekannten Verfahren Überzugsmittel hergestellt werden. Dazu werden beispielsweise die Bestandteile gründlich gemischt und homogenisiert und danach auf bekannten Aggregaten vermahlen. Das Überzugsmittel wird dann mit Lösungsmittel auf eine geeignete Viskosität eingestellt. Es besteht die Möglichkeit Einkomponenten-Materialien zu formulieren oder aber Zweikomponenten-Materialien; d.h. der Härter bildet gegebenenfalls zusammen mit Teilen der Additive, Lösungsmittel und der Pigmente eine zweite Komponente. Kurz vor der Applikation werden die beiden Komponenten im festgelegten Mischungsverhältnis gemischt, und es entsteht der applikationsfertige Lack. Dieser kann dann innerhalb einer gewissen Zeit verarbeitet werden. Die Trocknung und die Vernetzungsreaktion kann dabei entweder bei Raumtemperatur oder bei höherer Temperatur stattfinden. Werden 1K-Materialien verarbeitet, so werden diese Materialien im allgemeinen nur bei erhöhter Temperatur vernetzt.

Als Substrate sind die üblichen Kunststoff-Substrate geeignet; es können jedoch auch andere Oberflächen, z.B. Metall-Oberflächen beschichtet werden. Für die Kunststoff-Substrate seien als Harzbasis beispielsweise erwähnt: Phenol-Formaldehyd-Harze, Polyurethanharze, Polyharnstoffharze, Polyolefine, Polyester, PVC, Polyamide, Polycarbonate o.ä. Bevorzugt sind Substrate auf Basis von Polyamid oder Polyolefinen, besonders bevorzugt auf Basis von Polypropylen. Die Substrate können flexibel sein, d.h. sie können in gewissem Rahmen bei einer stoßartigen Schädigung verformbar sein, entweder elastisch oder nachfließend.

Diese Substrate werden nach üblichen Verfahren vorbereitet. So ist es beispielsweise möglich, daß die Oberfläche zum Entfernen von Graten oder Fehlstellen angeschliffen wird. Weiterhin können diese Teile mit Lösungsmitteln oder mit wäßrigen Lösungen gewaschen werden. Außerdem sind oxidative Vorbehandlungen möglich, wie z.B. Beflämmen der Teile. Auf die so vorbehandelten Substrate wird das Überzugsmittel appliziert.

Die Applikation kann auf verschiedene Art und Weise erfolgen. Sie wird von der Geometrie der Substrate mitbestimmt. Beispielsweise können die Überzugsmittel durch Spritzen auf das Substrat aufgetragen werden. Es ist jedoch auch möglich, die Substrate zu rollen oder zu tauchen oder auf andere Art und Weise zu beschichten. Je nach der Applikationsart ist die Viskosität des Überzugsmittels einzustellen. Nach dem Auftragen vernetzt der Polymerfilm entweder bei Raumtemperatur oder bei erhöhter Temperatur. Danach ist es möglich, daß weitere Schichten von Überzugsfilmen aufgetragen werden.

Die Schichtstärke beträgt im allgemeinen 5 bis 80 »m, je nach Anwendungszweck, bevorzugt sind jedoch 10 bis 35 »m. Die Trocknungsbedingungen variieren in weiten Grenzen zwischen 10 bis 160 °C. Dabei sind für 2K-Materialien 10 bis 100 °C besonders geeignet, für 1K-Materialien 80 bis 160 °C. Wenn verschiedene Kunststoffsubstrate eine verschiedene Wärmebeständigkeit aufweisen, kann die Wahl des Überzugsmittels je nach den anzuwendenden Trocknungstemperaturen erfolgen.

Beim erfindungsgemäßen Arbeiten erhält man eine homogene Oberfläche von Substraten verschiedener Art. Sie ist also besonders geeignet, hierauf weitere Lackfilme zu erzeugen. Die mit der Grundierung beschichteten Kunststoffsubstrate weisen eine gute Kälte-Schlagzähigkeit auf. Ebenso ist die Haftung der Überzugsschicht zum Kunststoffsubstrat gut. Die so beschichteten Substrate können in der Automobilindustrie auch auch zu anderen Zwecken verwendet werden. Da die Überzugsmittel bei unterschiedlichen Temperaturen zum Vernetzen gebracht werden können, ist es möglich, diese Temperatur auf das jeweilige Substrat abzustimmen. Damit werden die Maßhaltigkeit und Struktur der Kunststoffsubstrate sichergestellt.

Die folgenden Beispiele dienen zur Erläuterung der Erfindung. Teile (T) und Prozentangaben (%) beziehen sich jeweils auf das Gewicht.

### Beispiel 1

### Herstellung eines Bindemittels

In einem 4-Liter-Kolben, der mit Rührwerk, Thermometer, Kühler und zwei Tropftrichtern ausgestattet ist, werden 200 T Butylacetat und 132 T Xylol vorgelegt und unter Rühren auf 100°C aufgeheizt. Innerhalb von 5 Stunden werden eine Mischung aus Dimethylaminopropylmethacrylamid (200 T), 2-Ethylhexylacrylat (98 T), 2-Hydroxypropylmethacrylat (360 T), Isobutylmethacrylat (160 T), Methylmethacrylat (78 T) und Styrol (160 T) gleichzeitig zugetropft mit einer Initiatormischung aus Butylacetat (270 T), Xylol (143 T) und Azo-Bisisobutyronitril (17 T); die Temperatur wird genau bei 100°C gehalten und nach dem Zutropfen werden weitere 144 Teile der Initiatormischung zugegeben. Mit 20 Teilen Butylacetat werden die Tropftrichter gespült, danach polymerisiert der Ansatz 3 Stunden bei 100°C. Der Umsatz beträgt dann ca. 98 %, das Copolymerisat wird mit 407 T Butylacetat verdünnt und auf 60°C abgekühlt. Es werden 82 T eines halbverkappten Isocyanats hergestellt durch Reaktion von 560 Teilen des Trimeren von Hexamethylendiisocyanat, umgesetzt mit 197 T Acetessigester in einem Gemisch aus 150 T Xylol und Methoxypropylacetat, und nach Zugabe zu dem vorstehend erhaltenen Copolymerisat 2 Stunden bei 60°C gehalten. Das erhaltene Bindemittel ist praktisch NCO-frei.

### Beispiel 2

Es werden 40 T des Acrylharzes (Copolymerisat) nach Beispiel 1 (50 % in Butylacetat) mit 25,5 T Titandioxid, 2 T feindisperser Kieselsäure, 0,5 T Ruß und 10 T einer handelsüblichen CPO-Lösung (ca. 20 % chloriertes Polyolefin in Xylol) homogen gemischt, mit Xylol auf eine geeignete Viskosität eingestellt und vermahlen. Mit weiterem Xylol wird auf einen Festkörper von ca. 50 % eingestellt und zu dieser Mischung werden 10 T einer Lösung eines handelsüblichen Polyepoxidharzes (Mn ca. 400, Epoxidäquivalentgewicht ca. 400, 50 % in Butylacetat) gegeben und gut homogenisiert. Diese Grundierung wird auf das Substrat gespritzt und bei erhöhter Temperatur vernetzt.

### Beispiel 3

Es werden 50 T eines Acrylharzes nach Beispiel 1 mit 4 T Titandioxid, 0,05 T Ruß, 0,45 T feindisperse Kieselsäure, 18,5 T Aluminium-Magnesium-Silikat und 15 T einer handelsüblichen CPO-Lösung vermischt und mit wenig Butylacetat auf ca. 55 % Festkörper (FK) eingestellt und vermahlen. Zu dieser Mischung werden vor der Verwendung 10 T eines handelsüblichen aliphatischen Polyisocyanats (Desmodur N®, Trimeres aus Hexamethylendiisocyanat) gegeben und vermischt. Diese Grundierung wird aufgespritzt auf das Substrat und bei erhöhter Temperatur vernetzt.

### Beispiel 4

Es werden zu 24 T Acrylharz nach Beispiel 1 (50 %) 16 T eines OH-haltigen Polyesters nach EP-A-0 393 609 und 4 T eines handelsüblichen Melaminharzes (jeweils 50 % in BuOH) gegeben und mit 12 T Titandioxid, 13 T Bariumsulfat und 2 T Bentone sowie ca. 14 T Xylol vermischt und gründlich dispergiert. Dazu werden 5 T eines Vernetzers, hergestellt aus dem Trimeren von Hexamethylendiisocyanat und verkappt mit Butanonoxim, gegeben. Vor der Applikation wird das System mit ca. 10 T Butylacetat auf eine geeignete Spritzviskosität eingestellt. Der Lack wird bei 120 °C eingebrannt.

### Beispiel 5

Es werden 53 T eines Acrylharzes nach Beispiel 1 mit 5 T Titandioxid, 1 T Ruß, 18 T Aluminium-Magnesium-Silikat vermischt und mit Butylacetat auf ca. 55 Gew% FK eingestellt und vermahlen. Zu dieser Mischung werden vor der Verwendung 10 T eines handelsüblichen aliphatischen Polyisocyanats (Trimeres aus Hexamethylendiisocyanat) gegeben und vermischt. Diese Mischung wird mit wenig Xylol auf die zur Verarbeitung notwendige Viskosität eingestellt und auf das Substrat gespritzt. Sie wird bei erhöhter Temperatur vernetzt.

### Vergleichsversuch

Es werden 14 T eines Polyurethanharzes (50%ig in Butylacetat) nach DE-A-34 21 122 mit 5 T einer handelsüblichen CPO-Lösung (FK 20 %), 10 T Titandioxid, 0,5 T feindisperse Kieselsäure und 9,5 T Aluminium-Magnesium-Silikat zusammengegeben. Dazu werden ca. 60 T einer 1:1-Mischung Xylol/Butylacetat gegeben und die Mischung auf einem geeigneten Aggregat fein dispergiert. Vor dem Aufspritzen werden dazu 5 T eines handelsüblichen Isocyanats (Trimeres aus Hexamethylendiisocyanat) und ca. 5 T Butylacetat zum Einstellen der geeigneten Viskosität gegeben. Die Mischung wird homogenisiert und auf das Substrat gespritzt und bei erhöhter Temperatur vernetzt.

Die Lacke der vorstehenden Beispiele 2, 3 und 5 sowie des Vergleichsversuchs wurden auf Polypropylentafeln von 10 x 15 cm mit einer Dicke von 3 mm appliziert. Die Tafeln wurden vorher mit einer Lösung aus vollentsalztem Wasser und 50 % Propanol gewaschen und 10 Min bei 25°C getrocknet. Die erfindungsgemäße Grundierung wurde durch Spritzen aufgebracht, nach 5 Min Ablüften wurde 15 Min bei 80°C eingebrannt.

Anschließend wurde mit einem handelsüblichen hochelastischen 2K-Polyurethan-Decklack überspritzt, worauf 5 Min abgelüftet und erneut 45 Min bei 80°C eingebrannt wurde. Man erzielte eine Schichtdicke von 35 »m.

Die erhaltenen Platten wurden zum Test einer Durchstoßprüfung nach DIN 53443 bei -25°C unterzogen, wobei die Gesamtarbeitsaufnahme (Wges) gemessen wurde. Die erhaltenen Ergebnisse sind in der folgenden Tabelle aufgeführt.

| | Grundierung Schichtdicke | Gesamtarbeitsaufnahme (Wges) |
|---|---|---|
| Vergleichsversuch | 20 »m | 20 - 50 % |
| Beispiel 2 | 20 »m | 80 - 100 % |
| Beispiel 3 | 25 »m | 80 - 100 % |
| Beispiel 4 | 15 »m | 70 - 90 % |
| Beispiel 5 | 15 »m | 70 - 90 % |
| unlackierte Probe | ./. | 100 % |

## Patentansprüche

1. Verfahren zur Grundierung von Kunststoffsubstraten durch Auftrag eines Überzugsmittels auf der Basis von Hydroxypoly(meth)acrylcopolymerisaten und Lösemitteln und anschließende Aushärtung,
**dadurch gekennzeichnet,** daß man ein Überzugsmittel verwendet auf der Basis von
A) 10 bis 35 Gew% eines oder mehrerer Bindemittel mit einer OH-Zahl von 40 bis 150, das erhältlich ist durch Umsetzung von OH-Gruppen enthaltenden, aus (Meth)acrylamiden, Hydroxyalkyl(meth)acrylaten und copolymerisierbaren olefinisch ungesättigten Verbindungen aufgebauten Copolymerisaten, mit einem Zahlmittel des Molekulargewichts (Mn) von 3000 bis 100000, und einer Glasübergangstemperatur von -20 bis +75°C,
mit Polyisocyanaten,
B) 0 bis 20 Gew% weiterer Bindemittel,
C) 30 bis 70 Gew% organischer Lösemittel,
D) 15 bis 45 Gew% Pigmenten und/oder Füllstoffen
E) 0 bis 15 Gew% lacktechnischen Additiven, und
F) 1 bis 30 Gew% eines Vernetzers auf der Basis eines oder mehrerer Epoxidharze mit freien Epoxidgruppen oder eines oder mehrerer Polyisocyanate.

2. Verfahren nach Anspruch 1, dadurch gekennzeichnet, daß man ein Überzugsmittel verwendet, in dem die Bindemittelkomponente A) ein Umsetzungsprodukt ist aus
a) 80 bis 95 Gew% eines Copolymerisates aus
0,5 bis 40 Gew% eines oder mehrerer (Meth)acrylamide auf der Basis von ω-tert-Aminoalkylaminen und/oder primären Aminen;
10 bis 40 Gew% eines oder mehrerer Hydroxyalkyl(meth)acrylate,
20 bis 89,5 Gew% einer oder mehrerer copolymerisierbarer olefinisch ungesättigter Verbindungen, und
b) 5 bis 20 Gew% eines unverkappte und gegebenenfalls auch verkappte Isocyanatgruppen aufweisenden Polyisocyanats.

3. Verfahren nach Anspruch 1 oder 2, dadurch gekennzeichnet, daß als Vernetzer F) 2 bis 20 Gew% eines oder mehrerer Epoxidharze mit mindestens zwei Epoxidgruppen pro Molekül verwendet werden.

4. Verfahren nach Anspruch 3, dadurch gekennzeichnet, daß ein oder mehrere aromatische Epoxidharze verwendet werden.

5. Verfahren nach Anspruch 1 oder 2, dadurch gekennzeichnet, daß als Vernetzer F) 2 bis 20 Gew% eines oder mehrerer Polyisocyanate mit im Durchschnitt mehr als zwei reaktiven Isocyanatgruppen pro Molekül verwendet werden.

6. Verfahren nach Anpsruch 5, dadurch gekennzeichnet, daß ein oder mehrere aliphatische Polyisocyanate verwendet werden.

7. Verfahren nach einem der vorhergehenden Ansprüche, dadurch gekennzeichnet, daß
0,1 bis 15 Gew% lacktechnische Additive verwendet werden, bei denen es sich um Haftvermittler, Antischaummittel, Antikratermittel, Katalysatoren, Benetzungsmittel und/oder Verlaufsmittel handelt.

8. Verfahren nach Anspruch 7, dadurch gekennzeichnet, daß als Haftvermittler ein oder mehrere chlorierte Polyolefine mit einem Zahlenmittel des Molekulargewichts (Mn) von 5000 bis 50000 und einem Chlorgehalt von 10 bis 40 Gew%, verwendet werden.

9. Verfahren nach einem der vorhergehenden Ansprüche, dadurch gekennzeichnet, daß als Kunststoffsubstrat Polyolefine, insbesondere Polypropylen grundiert werden.

10. Überzugsmittel auf der Basis von Hydroxypoly(meth)acrylcopolymerisaten und Lösemitteln, dadurch gekennzeichnet, daß sie enthalten
A) 10 bis 35 Gew% eines oder mehrerer Bindemittel mit einer OH-Zahl von 40 bis 150, das erhältlich ist durch Umsetzung von OH-Gruppen enthaltenden, aus (Meth)acrylamiden, Hydroxyalkyl(meth)acrylaten und copolymerisierbaren olefinisch ungesättigten Verbindungen aufgebauten Copolymerisaten, mit einem Zahlmittel des Molekulargewichts (Mn) von 3000 bis 100000, und einer Glasübergangstemperatur von -20 bis +75°C,
mit Polyisocyanaten,
B) 0 bis 20 Gew% weiterer Bindemittel,
C) 30 bis 70 Gew% organischer Lösemittel,
D) 15 bis 45 Gew% Pigmenten und/oder Füllstoffen
E) 0 bis 15 Gew% lacktechnischen Additiven, und
F) 1 bis 30 Gew% eines Vernetzers auf der Basis eines oder mehrerer Polyisocyanate.

11. Überzugsmittel nach Anspruch 10, enthaltend als Bindemittelkomponente
A) ein Umsetzungsprodukt aus
a) 80 bis 95 Gew% Copolymerisat aus
0,5 bis 40 Gew% eines oder mehrerer (Meth)acrylamide auf der Basis von ω-tert-Aminoalkylaminen und/oder primären Aminen;
10 bis 40 Gew% eines oder mehrerer Hydroxyalkyl(meth)acrylate,
20 bis 89,5 Gew% einer oder mehrerer copolymerisierbarer olefinisch ungesättigter Verbindungen, und
b) 5 bis 20 Gew% eines unverkappte und gegebenenfalls auch verkappte Isocyanatgruppen aufweisenden Polyisocyanats.

12. Verwendung der Überzugsmittel nach einem der Ansprüche 10 oder 11 zur Beschichtung von Kunststoffsubstraten, insbesondere von Polyolefinen.

13. Kunststoffsubstrate, beschichtet nach dem Verfahren eines der Ansprüche 1 bis 9.

## Claims

1. Process for priming plastic substrates by applying a coating composition based on hydroxypoly(meth)acrylic copolymers and solvents and subsequent curing, characterised in that a coating composition is used which is based on
A) 10 to 35 wt.% of one or more binders with an OH value of 40 to 150 obtainable by reacting copolymers containing OH groups synthesised from (meth)acrylamides, hydroxyalkyl (meth)acrylates and copolymerisable olefinically unsaturated compounds, which copolymers have
a number average molecular weight (Mₙ) of 3,000 to 100,000 and
a glass transition temperature of -20 to +75°C, with polyisocyanates,
B) 0 to 20 wt.% of further binders,
C) 30 to 70 wt.% of organic solvents,
D) 15 to 45 wt.% of pigments and/or extenders,
E) 0 to 15 wt.% of lacquer additives and
F) 1 to 30 wt.% of a crosslinking agent based on one or more epoxy resins with free epoxy groups or one or more polyisocyanates.

2. Process according to claim 1, characterised in that a coating composition is used in which binder component
A) is a reaction product of
a) 80 to 95 wt.% of a copolymer prepared from
0.5 to 40 wt.% of one or more (meth)acrylamides based on ω-tert.-aminoalkylamines and/or primary amines;
10 to 40 wt.% of one or more hydroxyalkyl (meth)acrylates,
20 to 89.5 wt.% of one or more copolymerisable olefinically unsaturated compounds and
b) 5 to 20 wt.% of a polyisocyanate having uncapped and optionally also capped isocyanate groups.

3. Process according to claim 1 or 2, characterised in that 2 to 20 wt.% of one or more epoxy resins with at least two epoxy groups per molecule are used as the crosslinking agent F).

4. Process according to claim 3, characterised in that one or more aromatic epoxy resins are used.

5. Process according to claim 1 or 2, characterised in that 2 to 20 wt.% of one or more polyisocyanates with an average more than two reactive isocyanate groups per molecule are used as the crosslinking agent F).

6. Process according to claim 5, characterised in that one or more aliphatic polyisocyanates are used.

7. Process according to one of the preceding claims, characterised in that
0.1 to 15 wt.% of lacquer additives are used, which comprise adhesion promoters, anti-foaming agents, anti-cratering agents, catalysts, wetting agents and/or flow-control agents.

8. Process according to claim 7, characterised in that one or more polyolefins with a number average molecular weight (Mₙ) of 5,000 to 50,000 and a chlorine content of 10 to 40 wt.% are used as adhesion promoters.

9. Process according to one of the preceding claims, characterised in that the plastic substrate primed comprises polyolefins, in particular polypropylene.

10. Coating compositions based on hydroxypoly(meth)acrylic copolymers and solvents, characterised in that they contain
A) 10 to 35 wt.% of one or more binders with an OH value of 40 to 150 obtainable by reacting copolymers containing OH groups synthesised from (meth)acrylamides, hydroxyalkyl (meth)acrylates and copolymerisable olefinically unsaturated compounds, which copolymers have
a number average molecular weight (Mₙ) of 3,000 to 100,000 and
a glass transition temperature of -20 to +75°C, with polyisocyanates,
B) 0 to 20 wt.% of further binders,
C) 30 to 70 wt.% of organic solvents,
D) 15 to 45 wt.% of pigments and/or extenders,
E) 0 to 15 wt.% of lacquer additives and
F) 1 to 30 wt.% of a crosslinking agent based on one or more polyisocyanates.

11. Coating compositions according to claim 10 containing as binder component
A) a reaction product of
a) 80 to 95 wt.% of a copolymer prepared from
0.5 to 40 wt.% of one or more (meth)acrylamides based on ω-tert.-aminoalkylamines and/or primary amines;
10 to 40 wt.% of one or more hydroxyalkyl (meth)acrylates,
20 to 89.5 wt.% of one or more copolymerisable olefinically unsaturated compounds and
b) 5 to 20 wt.% of a polyisocyanate having uncapped and optionally also capped isocyanate groups.

12. Use of the coating compositions according to one of claims 10 or 11 for coating plastic substrates, in particular polyolefins.

13. Plastic substrates coated using the process of one of claims 1 to 9.

## Revendications

1. Procédé d'application d'une couche primaire sur des substrats en matière plastique par application d'un matériau de revêtement à base de copolymères hydroxypoly(méth)acryliques et de solvants, suivi d'un durcissement, caractérisé en ce que l'on utilise un matériau de revêtement à base de :
A) 10 à 35 % en poids d'un ou de plusieurs liants avec un nombre de OH de 40 à 150, que l'on obtient par transformation de copolymères contenant des groupes OH et formés de (méth)acrylamides, de (méth)acrylates d'hydroxyalkyle et de composés oléfiniques non saturés copolymérisables, avec une moyenne numérique de poids moléculaire (Mn) de 3000 à 100000, et une température de transition vitreuse de - 20°C à + 75°C,
avec des polyisocyanates,
B) 0 à 20 % en poids d'autres liants,
C) 30 à 70 % en poids de solvants organiques,
D) 15 à 45 % en poids de pigments et/ou de pigments de charge,
E) 0 à 15 % en poids d'additifs de la technologie des vernis, et
F) 1 à 30 % en poids d'un agent de réticulation à base d'une ou de plusieurs résines époxy comportant des groupes époxy libres ou bien d'un ou de plusieurs polyisocyanates.

2. Procédé selon la revendication 1, caractérisé en ce que l'on utilise un matériau de revêtement dans lequel le composant liant A) est un produit de la transformation de :
a) 80 à 95 % en poids d'un copolymère contenant
0,5 à 40 % en poids d'un ou de plusieurs (méth)acrylamides à base de w-tert.-aminoalkylamines et/ou d'amines primaires ;
10 à 40 % en poids d'un ou de plusieurs (méth)acrylates d'hydroxyalkyle
20 à 89,5 % en poids d'un ou de plusieurs composés oléfiniques non saturés copolymérisables, et
b) 5 à 20 % en poids d'un polyisocyanate présentant des groupes isocyanates non masqués et également, le cas échéant, masqués.

3. Procédé selon la revendication 1 ou 2, caractérisé en ce que l'on utilise comme agent de réticulation F) 2 à 20 % en poids d'une ou de plusieurs résines époxy comportant au moins deux groupes époxy par molécule.

4. Procédé selon la revendication 3, caractérisée en ce que l'on utilise une ou plusieurs résines époxy aromatiques.

5. Procédé selon la revendication 1 ou 2, caractérisé en ce que l'on utilise comme agent de réticulation F) 2 à 20 % en poids d'un ou de plusieurs polyisocyanates comportant en moyenne plus de deux groupes isocyanates réactifs par molécule.

6. Procédé selon la revendication 5, caractérisé en ce que l'on utilise un ou plusieurs polyisocyanates aliphatiques.

7. Procédé selon l'une quelconque des revendications précédentes, caractérisé en ce que 0,1 à 15 % en poids d'additifs de la technologie des vernis sont utilisés, s'agissant à ce propos d'agents adhésifs, d'agent anti-moussants, d'agents anticratères, de catalyseurs, d'agents d'imprégnation et/ou d'agents nivelants.

8. Procédé selon la revendication 7, caractérisé en ce que l'on utilise comme agent adhésif une ou plusieurs polyoléfines chlorées avec une moyenne numérique de poids moléculaire (Mn) de 5000 à 50000 et une teneur en chlore de 10 à 40 % en poids.

9. Procédé selon l'une quelconque des revendications précédentes, caractérisé en ce que les substrats en matière plastique sur lesquels on applique une couche primaire sont des polyoléfines, de préférence, des polypropylènes.

10. Matériau de revêtement à base de copolymères hydroxypoly(méth)acryliques et de solvants, caractérisé en ce qu'il contient
A) 10 à 35 % en poids d'un ou de plusieurs liants comportant un nombre de groupes OH de 40 à 150, obtenus par transformation de copolymères contenant des groupes OH et formés de (méth)acrylamides, de (méth)acrylates d'hydroxyalkyle et de composés oléfiniques non saturés copolymérisables, présentant une moyenne numérique de poids moléculaire (Mn) de 3000 à 100000, et une température de transition vitreuse de - 20°C à + 75°C,
avec des polyisocyanates,
B) 0 à 20 % en poids d'autres liants,
C) 30 à 70 % en poids de solvants organiques,
D) 15 à 45 % en poids de pigments et/ou de pigments de charge,
E) 0 à 15 % en poids d'additifs de la technologie des vernis, et
F) 1 à 30 % en poids d'un agent de réticulation à base d'un ou de plusieurs polyisocyanates.

11. Procédé selon la revendication 10, contenant comme composant liant
A) un produit de la transformation de
a) 80 à 95 % en poids d'un copolymère contenant
0,5 à 40 % en poids d'un ou de plusieurs (méth)acrylamides à base de w-tert.-aminoalkylamines et/ou d'amines primaires ;
10 à 40 % en poids d'un ou de plusieurs (méth)acrylates d'hydroxyalkyle,
20 à 89,5 % en poids d'un ou de plusieurs composés oléfiniques non saturés copolymérisables, et
b) 5 à 20 % en poids d'un polyisocyanate présentant des groupes isocyanates non masqués et également, le cas échéant, masqués.

12. Utilisation du matériau de revêtement selon l'une quelconque des revendications 10 ou 11 pour couvrir des substrats en matière plastique, en particulier des polyoléfines.

13. Substrats en matière plastique recouverts selon le procédé de l'une des revendications de 1 à 9.
